# EUROPÄISCHE PATENTSCHRIFT

(11) **EP 3 674 523 B1**
(45) Veröffentlichungstag und Bekanntmachung des Hinweises auf die Patenterteilung: **14.06.2023**
(21) Anmeldenummer: 19218462.0
(22) Anmeldetag: 20.12.2019
(51) Int. Cl.: F01N 3/021, F01N 3/10, F01N 13/00

(54) **ABGASNACHBEHANDLUNGSSYSTEM FÜR EINEN VERBRENNUNGSMOTOR**
EXHAUST GAS TREATMENT SYSTEM FOR A COMBUSTION ENGINE
SYSTÈME DE TRAITEMENT DES GAZ D'ÉCHAPPEMENT POUR UN MOTEUR À COMBUSTION INTERNE

(30) Priorität: 27.12.2018 DE 102018133634
(43) Veröffentlichungstag der Anmeldung: 01.07.2020
(73) Patentinhaber: VOLKSWAGEN AG, 38440 Wolfsburg (DE)
(72) Erfinder: Car, Onur Ulas, 10115 Berlin (DE); Paulovsky, Markus, 38448 Wolfsburg (DE)
(74) Vertreter: Gulde & Partner

(56) Entgegenhaltungen:
- EP-A1- 2 960 456
- DE-A1-102009 056 183
- DE-A1-102010 034 705
- DE-B3-102016 210 539
- US-A1- 2018 258 822

## Beschreibung

Die Erfindung betrifft ein Abgasnachbehandlungssystem für einen Verbrennungsmotor.

Aufgrund der guten Wirkungsgrade beim Ottomotor erfordert eine Regeneration eines Partikelfilters in Unterbodenposition spezielle Fahrzyklen. Zur Regeneration eines Partikelfilters werden beispielsweise Abgastemperaturen im Partikelfilter von >600°C benötigt. Eine motornahe Positionierung des Partikelfilters ist hierbei förderlich, denn dadurch liegen höhere Temperaturen am Partikelfilter im Betrieb vor. Weiterhin ist es momentan schwierig, eine Dreiwegebeschichtung auf einem Partikelfilter alterungsbeständig für alle Märkte bereitzustellen. Dadurch können für die Konvertierung der gasförmigen Komponenten neben dem beschichteten Partikelfilter noch zwei zusätzliche Drei-Wege-Katalysatoren erforderlich sein. Davon ist der erste Drei-Wege-Katalysator primär für das sogenannte Light-Off zuständig und der zweite Drei-Wege-Katalysator erhöht die Gesamtkonvertierungsleistung des Abgasnachbehandlungssystems.

Vom Stand der Technik bekannt ist ferner ein motornaher Dreiwege-Katalysator mit einem unbeschichteten Partikelfilter. Nachteilig ergibt sich dabei jedoch, dass bei nur einem Drei-Wege-Katalysator dieser deutlich größer gebaut werden muss, da der unbeschichtete Partikelfilter nicht an der Konvertierung der gasförmigen Komponenten teilnehmen kann. Daraus ergeben sich wiederum Light-Off-Probleme. Diesen Problemen wurde bisher aufwendig mit zusätzlichen Bauräumen, mehr Edelmetall auf dem Drei-Wege-Katalysator bei unbeschichtetem Partikelfilter oder durch Reduzierung der gasförmigen Rohemissionen mit eventuellen Nachteilen bei CO₂-Emmissionen begegnet.

Aus der DE 10 2015 215 365 A1 ist ferner ein Abgasnachbehandlungssystem mit zwei Katalysatoren für einen Verbrennungsmotor bekannt, bei welchem ein Verbrennungsmotor mit einem ersten NOx-Speicherkatalysator, einem in Strömungsrichtung eines Abgases des Verbrennungsmotors stromab des ersten NOx-Speicherkatalysators angeordneten Partikelfilter sowie einem stromab des ersten NOx-Speicherkatalysators angeordneten zweiten NOx-Speicherkatalysator offenbart ist.

Aus der WO 2005/113126 A1 ist ferner ein Abgasbehandlungssystem bekannt, welches ebenfalls einen vorgeschalteten, weiteren Katalysator zeigt. Auch aus der WO 2014/183998 A1 sind die Verwendung von mehreren Katalysatoren bekannt, insbesondere in Form von motornah angeordneten Vor-Katalysatoren.

Aus der EP 2 960 456 A ist eine Abgasnachbehandlung bekannt, in welcher ein erster Katalysator nach Durchströmung in Umfangsrichtung durchströmt wird, wobei dem Abgas bei der Umlenkung Reduktionsmittel injiziert wird.

In der DE 10 2010 034 705 A1 wird eine Abgasnachbehandlungseinheit gezeigt, bei welchem Abgas durch einen Katalysator geführt wird und anschließend konzentrisch um den Katalysator zurückgeführt wird.

In der DE 10 2009 056 183 A1 wird eine Abgasnachbehandlungseinheit offenbart, welche ebenfalls eine derartige konzentrische Abgasrückführung zeigt, wobei das Gehäuse eine Form zur Gleichverteilung der Strömungsgeschwindigkeiten aufweist.

Der Erfindung liegt nun die Aufgabe zugrunde, ein Abgasbehandlungssystem mit zwei Katalysatoren und Partikelfilter bereitzustellen, welches ein verbessertes Light-Off-Verhalten aufweist und eine verbesserte Konvertierung.

Erfindungsgemäß wird diese Aufgabe durch ein Abgasnachbehandlungssystem für einen Verbrennungsmotor gemäß Anspruch 1 gelöst.

Der erste und/oder zweite Katalysator sind bevorzugt Drei-Wege-Katalysatoren. Der Partikelfilter ist bevorzugt ein Ottopartikelfilter. Der erste Katalysator kann im Vergleich zu Realisierungen des Standes der Technik mit nur einem Katalysator kleiner ausgestaltet sein und hinsichtlich eines guten Light-Off-Verhaltens optimiert sein. Der zweite Katalysator kann eine entsprechend gute Gesamtkonvertierung aufweisen. Unter räumlicher Beabstandung wird mit anderen Worten verstanden, dass Abgasauslass des ersten Katalysators und Abgaseinlass des zweiten Katalysators an unterschiedlichen örtlichen Positionen liegen. Dadurch muss der Umströmungsbereich eine Mindeststrecke aufweisen. Durch die Eigenschaft der Strömungsverbindung ist sichergestellt, dass Abgas durch den ersten, den zweiten und den Partikelfilter durchgeleitet wird und die entsprechenden katalytischen, chemischen Umsetzungsprozesse stattfinden. Der Umströmungsbereich ist ein Bereich, welcher den ersten Katalysator zumindest teilweise oder auch nahezu vollständig umgibt oder ummantelt. Angrenzend kann in anderen Worten beschrieben bedeuten, dass dieser Umströmungsbereich mit der Außenfläche des ersten im räumlichen Kontakt steht.

Der Vorteil der Erfindung besteht darin, dass durch die Umströmung des ersten Katalysators durch den Umströmungsbereich der erste Katalysator durch Wärmeaustausch mit dem warmen beziehungsweise heißen Abgas eine Temperaturerhöhung erfährt. Somit wird eine Erwärmung des ersten Katalysators erzielt. Das Light-Off wird dadurch verbessert und in der Folge der katalytische Umsatz im ersten Katalysator optimiert. Zudem wird ein positiver Wärmehaushalt bereitet, da die Abgaswärme energetisch genutzt wird, den ersten Katalysator schneller in den effektiv-wirkenden katalytischen Temperaturbereich zu erwärmen. Eine solche und auch die weiteren Realisierungen sind zudem Package-neutral umsetzbar und zudem kosten-effizient. Regenerationen werden erleichtert. Zudem ist die Erfindung ideal umsetzbar bei gasförmigen Schadstoffen für Fahrzeuge mit hohen Schwungmassenklassen. Ein besonderer Vorteil ist, dass durch die Umströmung eine gleichmäßige Erwärmung des ersten Katalysators erfolgen kann.

Durch die in den abhängigen Ansprüchen aufgeführten Merkmale sind vorteilhafte Verbesserungen und nicht triviale Weiterentwicklungen des im unabhängigen Anspruch aufgeführten Abgasnachbehandlungssystems möglich.

Der erste Katalysator und der zweite Katalysator sind erfindungsgemäß zylindrisch ausgebildet. Der Umströmungsbereich ummantelt den ersten Katalysator nahezu vollständig.

Die Umströmung der zylindrischen Mantelfläche sorgt vorteilhaft für eine besonders gleichmäßige Erwärmung des ersten Katalysators.

Der Umströmungsbereich ist dabei angrenzend um eine Mantelfläche des ersten Katalysators ausbildbar.

Erfindungsgemäß ist vorgesehen, dass der erste Katalysator in einem Gehäuse eingebracht ist und der Umströmungsbereich durch einen Zwischenraum zwischen dem Gehäuse und dem ersten Katalysator ausgebildet ist. Dadurch wird eine einfache und kostengünstige Realisierung des Umströmungsbereichs ermöglicht, sodass die Gehäusewände das Abgas im Umströmungsbereich halten und zumindest durch Gasdruck in den ersten Katalysator drücken. Die Gehäusewände können auch als Umlenkmittel zur Umlenkung des Abgasstroms fungieren.

In bevorzugter Ausgestaltung der Erfindung ist vorgesehen, dass an einer Auslassseite des ersten Katalysators eine Umlenkeinrichtung positioniert ist, welche dazu eingerichtet ist, das Abgas von der Auslassseite des ersten Katalysators dem Umströmungsbereich des ersten Katalysators zuzuführen. Eine solche Umlenkeinrichtung kann beispielsweise ein Blech sein bzw. ein Umlenkblech sein, welches dem Abgas eine gewünschte Strömungsrichtung auferlegt. Beispielsweise kann die Umlenkeinrichtung eine Öffnung ausbilden, welche in die Umlenkrichtung geneigt ist. Mit einer Umlenkeinrichtung kann die Abgasumströmung verbessert werden. Insbesondere kann eine geeignete Anströmung des ersten Katalysators erfolgen, so dass der Umströmungsbereich gleichmäßig durchströmt wird. Zum Beispiel kann eine Mantelfläche des ersten Katalysators derart angeströmt werden, dass ein Teil der Abgasströmung den Mantel oberhalb und ein anderer Teil den Mantel unterhalb umströmt und die Mantelfläche insbesondere gleichförmig umströmt wird.

In weiterer bevorzugter Ausgestaltung ist vorgesehen, dass der erste Katalysator eine erste Abgasdurchführungsrichtung zum Durchführen von Abgas umfasst, und wobei der zweite Katalysator eine zweite Abgasdurchführungsrichtung zum Durchführen von Abgas umfasst, und wobei der erste Katalysator zum zweiten Katalysator derart orientiert ist, dass die erste und zweite Abgasdurchführungsrichtung dass die erste und zweite Abgasdurchführungsrichtung zwischen 45° und 135° zueinander orientiert sind, bevorzugter zwischen 60° und 120° zueinander orientiert sind, besonders bevorzugt senkrecht zueinander sind. So wird eine Anordnung konzipiert, welche geeignet ist, eine Umlenkung zu ermöglichen, so dass der erste Katalysator sowohl durchströmt als auch umströmt werden kann.

In weiterer bevorzugter Ausgestaltung der Erfindung ist der Umströmungsbereich in Querschnittsansicht des ersten Katalysators von der ersten Abgasdurchführungsrichtung aus betrachtet oberhalb und/oder unterhalb des ersten Katalysators ausgebildet. Dadurch kann eine gleichmäßige Erwärmung erzielt werden.

In weiterer bevorzugter Ausgestaltung der Erfindung ist zwischen Gehäuse und erstem Katalysator auf der Auslassseite ein erster Abstand ausgebildet, welcher sich in zweiter Abgasdurchführungsrichtung verjüngt. Dadurch wird ausgelassenes Abgas in Umlenkrichtung weg vom zweiten Katalysator umgelenkt. Der erste Abstand zwischen Umlenkeinrichtung und erstem Katalysator ausgebildet sein.

Erfindungsgemäß ist zwischen dem Gehäuse und dem ersten Katalysator auf der zum zweiten Katalysator abgewandten Seite ein zweiter Abstand ausgebildet, welcher sich in erster Abgasdurchführungsrichtung verbreitert. Hierdurch wird eine verbesserte Umlenkung des Abgases in Richtung des zweiten Katalysators und somit auf den Umströmungsbereich erzielt.

In weiterer bevorzugter Ausgestaltung der Erfindung kann der erste Katalysator als ein Metallkatalysator ausgebildet und der zweite Katalysator als ein Metallkatalysator oder als ein Keramik-Katalysator ausgebildet sein. Der Metallkatalysator weist typischerweise ein besseres Light-Off-Verhalten auf.

In weiterer bevorzugter Ausgestaltung der Erfindung ist der erste Katalysator und/oder der zweite Katalysator mit einer Washcoat-Beschichtung mit oder ohne Edelmetall versehen. Besonders bevorzugt kann beispielsweise ein HC-Adsorber zum Einsatz kommen.

In weiterer bevorzugter Ausgestaltung der Erfindung ist der Partikelfilter mit einer Washcoat-Beschichtung mit oder ohne Edelmetall versehen.

In weiterer bevorzugter Ausgestaltung der Erfindung ist der erste Katalysator mit einer Washcoat-Beschichtung mit Edelmetall versehen, der zweite Katalysator mit einer Washcoat-Beschichtung mit Edelmetall versehen und der Partikelfilter mit einer Washcoat-Beschichtung ohne Edelmetall versehen.

Weiterhin wird ein Fahrzeug mit einem Verbrennungsmotor vorgeschlagen, wobei das Fahrzeug ein Abgasnachbehandlungssystem nach einem der obigen Ausführungen umfasst.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel für ein erfindungsgemäßes Abgasnachbehandlungssystem; und
- Figur 2: eine Querschnittsansicht des ersten Katalysators in erfindungsgemäßer Ausführung.

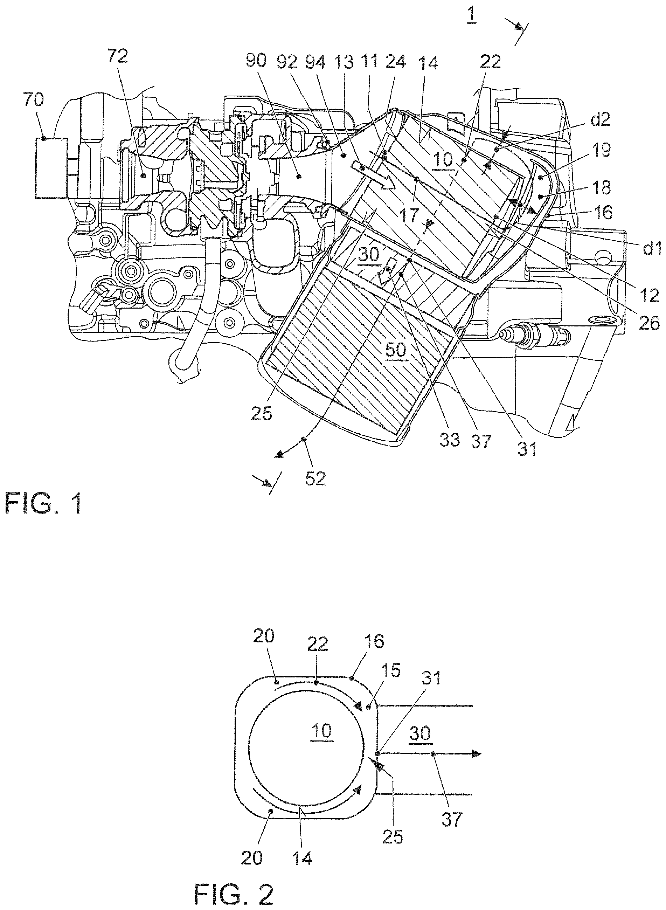

Figur 1 zeigt eine beispielhafte Ausführungsform eines Abgasnachbehandlungssystems 1 gemäß der Erfindung. In der vorliegenden Darstellung sind noch weitere, zusätzliche Komponenten dargestellt, in welche das Abgasnachbehandlungssystem 1 eingebaut ist, wobei die technische Darstellung lediglich beispielhaft zum Zwecke der Illustration dient und die Erfindung nicht auf eine solche Realisierung beschränkt ist. Dem Abgasnachbehandlungssystem 1 wird Abgas von einem Verbrennungsmotor 70 zugeführt. Der Verbrennungsmotor 70, bevorzugt ein Ottomotor, ist hierbei schematisch dargestellt. Ferner ist beispielhaft ein Turbolader mit Verdichter 72 und Turbine 90 gezeigt. Über einen Verbindungsflansch 92 schließt beispielhaft ein Einlasstrichter 94 an die Turbine 90 an. Über den Einlasstrichter 94 wird in dieser Ausführungsform beispielhaft das Abgas dem Abgasnachbehandlungssystem 1 zugeführt. In dieser beispielhaften Ausführung ist der Einlasstrichter 94 ausgangsseitig geneigt und lenkt den Abgasstrom durch die gekippte Trichteröffnung ab, wie aus der Figur 1 erkennbar, wobei auch dies nur eine beispielhafte, konstruktiv geeignete Realisierung ist, die Erfindung aber nicht derartig beschränkt ist.

Das Abgasnachbehandlungssystem 1 umfasst ferner einen ersten Katalysator 10. Der erste Katalysator 10 umfasst ferner einen Abgaseinlass 11 zum Einlassen des Abgases in den ersten Katalysator 10. In dieser beispielhaften Anordnung schließt eine Zuführseite 24 des ersten Katalysators 10 an die Trichteröffnung des Einlasstrichters 94 an. Der erste Katalysator 10 wird von dem Abgas durchströmt und auf einem gegenüber von dem ersten Abgaseinlass 11 befindlichen Abgasauslass 12 wieder ausgelassen. Weiterhin ist ein relativ zum ersten Katalysator 10 stromabwärts angeordneter zweiter Katalysator 30 positioniert.

Dieser zweite Katalysator 30 ist mit dem ersten Katalysator 10 zur Durchführung des Abgases von dem ersten Katalysator 10 in den zweiten Katalysator 30 strömungsverbunden. In dieser bevorzugten Ausführungsform schließt der zweite Katalysator 30 an den ersten Katalysator 10 kompakt an. Der zweite Katalysator 30 umfasst ferner ebenfalls einen Abgaseinlass 31, welcher räumlich von dem Abgasauslass 12 des ersten Katalysators 10 beabstandet ist.

Sowohl erster Katalysator 10 als auch zweiter Katalysator 30 können bevorzugt als Drei-Wege-Katalysatoren ausgeführt sein, welche demnach Kohlenstoffmonoxid (CO), Stickoxide (NOₓ) und unverbrannte Kohlenwasserstoffe (HC) zu Kohlenstoffdioxid (CO₂), Stickstoff (N₂) und Wasser (H₂O) umwandeln. Der erste Katalysator 10 oder der zweite Katalysator 30 können ferner auch mit einer Washcoat-Beschichtung, insbesondere mittels geeigneter Metalloxide, versehen werden. Der erste Katalysator 10 ist bevorzugt wegen schnellerem Light-Off als ein Metallkatalysator ausgebildet und der zweite Katalysator 30 kann als ein Metallkatalysator oder als ein Keramik-Katalysator ausgebildet sein.

Des Weiteren weist das Abgasbehandlungssystem 1 einen relativ zum zweiten Katalysator 30 stromabwärts angeordneten Partikelfilter 50 auf. Dieser ist mit dem zweiten Katalysator 30 zur Durchführung des Abgases von dem zweiten Katalysator 30 in den Partikelfilter 50 strömungsverbunden. Auch hier ist beispielhaft, obwohl die Erfindung nicht darauf beschränkt ist, der Partikelfilter 50 unmittelbar beziehungsweise direkt an den zweiten Katalysator 30 anschließend. In anderen Ausführungsformen, wenn zusätzlich noch ein dritter Katalysator an den zweiten Katalysator 30 anschließt, kann der Partikelfilter 50 auch in einem Unterboden eines Fahrzeugs, das heißt also motorfern, positioniert werden und nicht motornah wie in der beispielhaften dargestellten Figur 1. In der Figur 1 sind demnach sowohl erster Katalysator 10, zweiter Katalysator 30 als auch der Partikelfilter 50 motornah positioniert. Resultierend wird die im Verbrennungsmotor 70 erzeugte Abwärme von den Katalysatoren 10, 30 und dem Partikelfilter 50 vorteilhaft aufgenommen und somit eine Performance-Verbesserung der katalytischen Eigenschaften bewirkt. Der Partikelfilter 50 ist dabei bevorzugt ein Ottopartikelfilter. Vorzugsweise ist dieser Ottopartikelfilter in dieser Ausführungsform ohne Beschichtung ausgeführt, jedoch können in anderen Ausführungsformen entsprechende Beschichtungen vorgesehen sein. Hinter dem Partikelfilter 50 ist beispielhaft ein Auslass 52 aus dem Abgasnachbehandlungssystem 1 gezeigt.

Ein Umströmungsbereich 20 ist angrenzend um eine Außenfläche 14 des ersten Katalysators 10 ausgebildet. In dem Umströmungsbereich 20 strömt das Abgas von dem Abgasauslass 12 des ersten Katalysators 10 zu dem Abgaseinlass 31 in den zweiten Katalysator 30. Der Umströmungsbereich 20 stellt dabei ein Strömungsvolumen dar, welches mit der Außenfläche 14 des ersten Katalysators 10 räumlich in Kontakt steht. Der Umströmungsbereich umgibt oder ummantelt den ersten Katalysator 10 erfindungsgemäß nahezu vollständig. Der Katalysator ist erfindungsgemäß zylinderförmig ausgebildet. Dann ist der Umströmungsbereich bevorzugt angrenzend um eine Mantelfläche des ersten Katalysators 10 ausgebildet. Dadurch wird eine besonders gleichmäßige Erwärmung des ersten Katalysators 10 beziehungsweise dessen Katalysatorsubstrats erzielt. Eine beispielhafte, schematische Darstellung des Umströmungsbereichs 20 kann der Figur 2 in Querschnittsansicht entnommen werden.

Das Abgas umströmt somit den ersten Katalysator 10 beziehungsweise dessen Außenfläche 14, nachdem der Abgasstrom durch den ersten Katalysator 10 durchgeführt wurde. Der Abgasstrom strömt dann bis zu dem zweiten Abgaseinlass 31 von dem Abgasauslass 12 des ersten Katalysators 10. Erst dann wird der Abgasstrom in den zweiten Katalysator 30 über den zweiten Abgaseinlass 31 eingekoppelt bzw. eingeführt, so dass in Folge eine katalytische Wirkung mit dem zweiten Katalysator 30 erfolgt.

In der Figur 1 sind dazu rein schematisch Strömungslinien eingezeichnet, welche einen beispielhaften Strömungspfad beschreiben. Vom Abgaseinlass 11 des ersten Katalysators strömt ein erster katalytischer Abgasstrom 17 in erster Abgasdurchführungsrichtung 13 bis zum Abgasauslass 12 des ersten Katalysators 10. In diesem Abschnitt findet bereits eine katalytische Wirkung statt. Ausgehend vom Abgasauslass 12 wird der Abgasstrom umgelenkt und dem Umströmungsbereich 20 zugeführt. Dann bildet der Abgasstrom einen wärmeaustauschender Abgasstrom 22, welcher einen auf Grund der Schnittansicht hier nur schematisch angedeuteten Stromverlauf des Abgases von dem Abgasauslass 12 durch den Umströmungsbereich 20 und zu einer Abgabeseite 25 und zum Abgaseinlass 31 des zweiten Katalysators 30 beschreibt. In diesem Strömungsabschnitt wird Wärme auf den ersten Katalysator 10 übertragen. Dann dringt das Abgas über den Abgaseinlass 31 des zweiten Katalysators 30 in den zweiten Katalysator 30 ein und bildet einen zweiten katalytischen Abgasstrom 37 aus in zweiter Durchführungsrichtung 33. In diesem Abschnitt findet wieder katalytische Wirkung statt.

In dieser bevorzugten Ausführungsform ist der erste Katalysator 10 in einem Gehäuse 16 eingebracht. Das Gehäuse 16 umgibt in dieser Ausführungsform zumindest den ersten Katalysator 10. Durch das Gehäuse 16 wird der Umströmungsbereich 20 durch einen Zwischenraum 15 zwischen dem Gehäuse 16 und dem ersten Katalysator 10 ausgebildet.

In dieser beispielhaften Ausführung ist ferner an einer Auslassseite 26 des ersten Katalysators 10, an der der Abgasauslass 12 positioniert ist, eine Umlenkeinrichtung 18 positioniert ist. Diese Umlenkeinrichtung 18 ist dazu eingerichtet, das Abgas von der Auslassseite 26 des ersten Katalysators 10 dem Umströmungsbereich 20 des ersten Katalysators 10 zuzuführen. Eine solche Umlenkeinrichtung kann beispielsweise ein Blech sein bzw. ein Umlenkblech sein, welches dem Abgas eine gewünschte Strömungsrichtung aufzwingt. Beispielsweise kann die Umlenkeinrichtung 18 eine in Umlenkrichtung orientierte Öffnung aufweisen. Die Öffnung kann dabei verschiedene Ausrichtungen haben, so dass der erste Katalysator 10 in bestimmter Weise abhängig von Geometrie und Anordnung optimal angeströmt wird. Insbesondere kann eine geeignete Anströmung des ersten Katalysators 10 erfolgen, so dass der Umströmungsbereich gleichmäßig durchströmt wird.

In dieser Ausführungsform ist der erste Katalysator 10 zum zweiten Katalysator 30 vertikal ausgerichtet. Das bedeutet mit anderen Worten ausgedrückt, dass die erste Abgasdurchführungsrichtung 13 senkrecht zur zweiten Abgasdurchführungsrichtung 33 orientiert ist. Dadurch erfolgt eine Umlenkung des Abgasstroms um effektiv 90° innerhalb des Gehäuses 16 von erster Abgasdurchführungsrichtung 13 in Richtung der zweiten Abgasdurchführungsrichtung 33. In anderen Ausführungen der Erfindung kann die erste und zweite Abgasdurchführungsrichtung 13, 33 zwischen 45° und 135° zueinander orientiert sein, bevorzugter zwischen 60° und 120°.

In dieser beispielhaften Ausführungsform weisen der erste Katalysator 10 und der zweite Katalysator 30 eine lineare Anordnung auf. Hier insbesondere bilden sogar der erste Katalysator 10, der zweite Katalysator 30 und der Partikelfilter 50 eine lineare Anordnung aus, was einem kompakten Aufbau entspricht.

Der wird von der Auslassseite 26 des ersten Katalysators 10 durch das Gehäuse 16 und/oder die dazwischen positionierte Umlenkeinrichtung 18 unterstützend umgelenkt.

Dazu ist das Gehäuse 16 an der Auslassseite 26 derart orientiert, dass der herausströmende Abgasstrom, hier zunächst von der ersten Abgasdurchführungsrichtung 13, in entgegengesetzte Richtung zur zweiten Abgasdurchführungsrichtung 33 umgelenkt wird. Das Gehäuse 16 bildet dabei eine ausbuchtende Rundung 19 an der Auslassseite 26 aus. Dabei ist beispielhaft die Rundung 19 unterstützend zur Umlenkung des Abgasstroms vom zweiten Katalysator 30 abweisend nach außen hin weggestreckt.

Beispielsweise kann sich ein erster Abstand d1 zwischen Gehäuse 16 und erstem Katalysator 10 auf der Auslassseite 26 in zweiter Abgasdurchführungsrichtung 33 verjüngen, sodass der anströmende Abgasstrom weg vom zweiten Katalysator 30 umgelenkt wird. Ferner weist in dieser Ausführungsform das Gehäuse 16 eine Rundung 19 zur verbesserten Umströmung aus. Auch kann, wie in der Figur 1 beispielhaft gezeigt, ein zweiter Abstand d2 zwischen dem Gehäuse 16 und dem ersten Katalysator 10 sich auf der zum zweiten Katalysator 30 abgewandten Seite in erster Abgasdurchführungsrichtung 13 verbreitern. Dadurch kann der Eintritt in den an der Außenfläche 14 angrenzenden Umströmungsbereich 20 in Richtung zum zweiten Katalysator 30 verbessert werden.

In der Figur 2 ist eine Querschnittsansicht des ersten Katalysators 10 in erster Abgasdurchführungsrichtung 13 betrachtet gezeigt, vergleiche dazu auch die Schnittansichtszeichen in Figur 1.

Hierbei ist der Querschnitt des ersten Katalysators 10 rein beispielhaft zylindrisch ausgebildet. Der Umströmungsbereich 20 liegt angrenzend an der Außenfläche 14 des ersten Katalysators 10 an. Die Außenfläche 14 bildet eine Mantelfläche des ersten Katalysators 10 aus. Rein beispielhaft ist ein Umströmungsbereich 20 als Zwischenraum 15 zwischen erstem Katalysator 10 und dem Gehäuse 16 schematisch gezeigt.

Der Umströmungsbereich 20 in Querschnittsansicht des ersten Katalysators 10 aus der ersten Abgasdurchführungsrichtung 13 betrachtet ist beispielhaft oberhalb und unterhalb des ersten Katalysators 10 ausgebildet. Das bedeutet, dass die Mantelfläche im Querschnitt betrachtet den Abgasstrom in zwei Strömungsanteile aufteilt, welche in gegensätzlichem Drehsinn im Umströmungsbereich 20 um den ersten Katalysator 10 strömen, siehe dazu die angedeuteten Pfeile. Dadurch wird eine besonders gleichmäßige Erwärmung erzielt, wobei die Erfindung nicht darauf reduziert ist. Die Erfindung ist jedoch nicht auf eine solche Umströmung beschränkt.

Nach Umströmung des ersten Katalysators 10 tritt der Abgasstrom in den zweiten Katalysator 30 ein, in dem dann auch die katalytischen Reaktionen stattfinden. Das Abgas folgt dann dem katalytischen Abgasstrom 37 aus der Figur 1.

### Bezugszeichenliste

- 1: Abgasnachbehandlungssystem

- 10: erster Katalysator
- 11: Abgaseinlass
- 12: Abgasauslass
- 13: erste Abgasdurchführungsrichtung
- 14: Außenfläche
- 15: Zwischenraum
- 16: Gehäuse
- 17: erster katalytischer Abgasstrom
- 18: Umlenkeinrichtung
- 19: Rundung

- 20: Umströmungsbereich
- 22: wärmeaustauschender Abgasstrom
- 24: Zuführseite
- 25: Abgabeseite
- 26: Auslassseite

- 30: zweiter Katalysator
- 31: Abgaseinlass
- 33: zweite Abgasdurchführungsrichtung
- 37: zweiter katalytischer Abgasstrom

- 50: Partikelfilter
- 52: Auslass

- 70: Verbrennungsmotor
- 72: Verdichter
- 90: Turbine
- 92: Flansch
- 94: Einlasstrichter

- d1: erster Abstand
- d2: zweiter Abstand

## Patentansprüche

1. Abgasnachbehandlungssystem (1) für einen Verbrennungsmotor, umfassend:
- einen ersten Katalysator (10), welcher einen Abgaseinlass (11) zum Einlassen des Abgases in den ersten Katalysator (10) und einen gegenüberliegend positionierten Abgasauslass (12) umfasst;
- einen relativ zum ersten Katalysator (10) stromabwärts angeordneten zweiten Katalysator (30), welcher mit dem ersten Katalysator (10) zur Durchführung des Abgases von dem ersten Katalysator (10) in den zweiten Katalysator (30) strömungsverbunden ist und ebenfalls einen Abgaseinlass (31) umfasst, wobei der Abgaseinlass (31) des zweiten Katalysators (30) von dem Abgasauslass (12) des ersten Katalysators (10) räumlich beabstandet ist;
- einen relativ zum zweiten Katalysator (30) stromabwärts angeordneten Partikelfilter (50), welcher mit dem zweiten Katalysator (30) zur Durchführung des Abgases von dem zweiten Katalysator (30) in den Partikelfilter (50) strömungsverbunden ist;
wobei ein Umströmungsbereich (20) angrenzend um eine Außenfläche (14) des ersten Katalysators (10) ausgebildet ist, in welchem das Abgas von dem Abgasauslass (12) zu dem Abgaseinlass (31) in den zweiten Katalysator (30) strömt, wobei
der erste Katalysator (10) in ein Gehäuse (16) eingebracht ist und der Umströmungsbereich (20) durch einen Zwischenraum (15) zwischen dem Gehäuse (16) und dem ersten Katalysator (10) ausgebildet ist, wobei
die Katalysatoren (10, 20) zylinderförmig ausgebildet sind;
**dadurch gekennzeichnet, dass**
der Umströmungsbereich den ersten Katalysator (10) nahezu vollständig ummantelt; und
zwischen dem Gehäuse (16) und dem ersten Katalysator (10) auf der zum zweiten Katalysator (30) abgewandten Seite ein zweiter Abstand (d2) ausgebildet ist, welcher sich in erster Abgasdurchführungsrichtung (13) vom Abgaseinlass (11) zum Abgasauslass (12) des ersten Katalysators (10) verbreitert.

2. Abgasnachbehandlungssystem (1) nach Anspruch 1, wobei der Umströmungsbereich (20) angrenzend um eine Mantelfläche des ersten Katalysators (10) ausgebildet ist.

3. Abgasnachbehandlungssystem (1) nach einem der vorherigen Ansprüche, **dadurch gekennzeichnet, dass** an einer Auslassseite (26) des ersten Katalysators eine Umlenkeinrichtung (18) positioniert ist, welche dazu eingerichtet ist, das Abgas von der Auslassseite (26) des ersten Katalysators (10) dem Umströmungsbereich (20) des ersten Katalysators (10) zuzuführen.

4. Abgasnachbehandlungssystem (1) nach einem der vorherigen Ansprüche, **dadurch gekennzeichnet, dass** der erste Katalysator (10) eine erste Abgasdurchführungsrichtung (13) zum Durchführen von Abgas umfasst, und wobei der zweite Katalysator (30) eine zweite Abgasdurchführungsrichtung (33) zum Durchführen von Abgas umfasst, und wobei der erste Katalysator (10) zum zweiten Katalysator (30) derart orientiert ist, dass die erste und zweite Abgasdurchführungsrichtung (13, 33) zwischen 45° und 135° zueinander orientiert sind, bevorzugter zwischen 60° und 120° zueinander orientiert sind, besonders bevorzugt senkrecht zueinander sind.

5. Abgasnachbehandlungssystem (1) nach einem der vorherigen Ansprüche, **dadurch gekennzeichnet, dass** der Umströmungsbereich (20) in Querschnittsansicht des ersten Katalysators (10) von der ersten Abgasdurchführungsrichtung (13) aus betrachtet oberhalb und/oder unterhalb des ersten Katalysators (10) ausgebildet ist.

6. Abgasnachbehandlungssystem (1) nach Anspruch 1, **dadurch gekennzeichnet, dass** zwischen Gehäuse (16) und erstem Katalysator (10) auf der Auslassseite (26) ein erster Abstand (d1) ausgebildet ist, welcher sich in zweiter Abgasdurchführungsrichtung (33) verjüngt.

7. Abgasnachbehandlungssystem (1) nach einem der vorherigen Ansprüche, **dadurch gekennzeichnet, dass** der erste Katalysator (10) als ein Metallkatalysator ausgebildet und der zweite Katalysator (30) als ein Metallkatalysator oder als ein Keramik-Katalysator ausgebildet sind.

8. Abgasnachbehandlungssystem (1) nach einem der vorherigen Ansprüche, **dadurch gekennzeichnet, dass** der erste Katalysator (10) und/oder der zweite Katalysator (30) mit einer Washcoat-Beschichtung mit oder ohne Edelmetall versehen ist.

9. Abgasnachbehandlungssystem (1) nach einem der vorherigen Ansprüche, **dadurch gekennzeichnet, dass** der Partikelfilter (50) mit einer Washcoat-Beschichtung mit oder ohne Edelmetall versehen ist.

10. Fahrzeug, **dadurch gekennzeichnet, dass** das Fahrzeug einen Verbrennungsmotor (70) mit einem Abgasnachbehandlungssystem (1) nach einem der vorherigen Ansprüche 1-9 umfasst.

## Claims

1. Exhaust gas aftertreatment system (1) for an internal combustion engine, comprising:
- a first catalytic converter (10) which comprises an exhaust gas inlet (11) for admitting the exhaust gas into the first catalytic converter (10) and an exhaust gas outlet (12) which is positioned opposite it;
- a second catalytic converter (30) which is arranged downstream relative to the first catalytic converter (10), is flow-connected to the first catalytic converter (10) to conduct the exhaust gas from the first catalytic converter (10) into the second catalytic converter (30), and likewise comprises an exhaust gas inlet (31), the exhaust gas inlet (31) of the second catalytic converter (30) being spaced apart spatially from the exhaust gas outlet (12) of the first catalytic converter (10),
- a particulate filter (50) which is arranged downstream relative to the second catalytic converter (30) and is flow-connected to the second catalytic converter (30) to conduct the exhaust gas from the second catalytic converter (30) into the particulate filter (50),
a flow-around region (20) being configured adjacently around an outer face (14) of the first catalytic converter (10), in which flow-around region the exhaust gas flows from the exhaust gas outlet (12) to the exhaust gas inlet (31) into the second catalytic converter (30),
the first catalytic converter (10) being introduced into a housing (16), and the flow-around region (20) being configured by way of an intermediate space (15) between the housing (16) and the first catalytic converter (10),
the catalytic converters (10, 20) being of cylindrical configuration;
**characterized in that**
- the flow-around region encapsulates the first catalytic converter (10) virtually completely, and
a second spacing (d2) is configured between the housing (16) and the first catalytic converter (10) on the side which faces away from the second catalytic converter (30), which second spacing widens in a first exhaust gas conducting direction (13) from the exhaust gas inlet (11) to the exhaust gas outlet (12) of the first catalytic converter (10).

2. Exhaust gas aftertreatment system (1) according to Claim 1, the flow-around region (20) being configured adjacently around a shell surface of the first catalytic converter (10).

3. Exhaust gas aftertreatment system (1) according to either of the preceding claims, **characterized in that** a deflection device (18) is positioned on an outlet side (26) of the first catalytic converter, which deflection device is configured to feed the exhaust gas from the outlet side (26) of the first catalytic converter (10) to the flow-around region (20) of the first catalytic converter (10).

4. Exhaust gas aftertreatment system (1) according to one of the preceding claims, **characterized in that** the first catalytic converter (10) comprises a first exhaust gas conducting direction (13) for conducting exhaust gas, and the second catalytic converter (30) comprising a second exhaust gas conducting direction (33) for conducting exhaust gas, and the first catalytic converter (10) being oriented with respect to the second catalytic converter (30) in such a way that the first and second exhaust gas conducting directions (13, 33) are oriented at between 45° and 135° with respect to one another, more preferably are oriented at between 60° and 120° with respect to one another, and particularly preferably are perpendicular with respect to one another.

5. Exhaust gas aftertreatment system (1) according to one of the preceding claims, **characterized in that** the flow-around region (20) is configured above and/or below the first catalytic converter (10) as viewed from the first exhaust gas conducting direction (13) in a cross-sectional view of the first catalytic converter (10).

6. Exhaust gas aftertreatment system (1) according to Claim 1, **characterized in that** a first spacing (d1) which tapers in a second exhaust gas conducting direction (33) is configured between the housing (16) and the first catalytic converter (10) on the outlet side (26).

7. Exhaust gas aftertreatment system (1) according to one of the preceding claims, **characterized in that** the first catalytic converter (10) is configured as a metal catalyst, and the second catalytic converter (30) is configured as a metal catalyst or as a ceramic catalyst.

8. Exhaust gas aftertreatment system (1) according to one of the preceding claims, **characterized in that** the first catalytic converter (10) and/or the second catalytic converter (30) are/is provided with a washcoat coating with or without noble metal.

9. Exhaust gas aftertreatment system (1) according to one of the preceding claims, **characterized in that** the particulate filter (50) is provided with a washcoat coating with or without noble metal.

10. Vehicle, **characterized in that** the vehicle comprises an internal combustion engine (70) with an exhaust gas aftertreatment system (1) according to one of Claims 1-9.

## Revendications

1. Système de post-traitement de gaz d'échappement (1) pour un moteur à combustion interne, comprenant :
- un premier catalyseur (10), qui comprend une admission de gaz d'échappement (11) pour l'admission du gaz d'échappement dans le premier catalyseur (10) et une sortie de gaz d'échappement (12) positionnée à l'opposé ;
- un deuxième catalyseur (30) agencé en aval par rapport au premier catalyseur (10), qui est relié fluidiquement au premier catalyseur (10) pour le passage du gaz d'échappement du premier catalyseur (10) dans le deuxième catalyseur (30) et qui comprend également une admission de gaz d'échappement (31), l'admission de gaz d'échappement (31) du deuxième catalyseur (30) étant espacée spatialement de la sortie de gaz d'échappement (12) du premier catalyseur (10) ;
- un filtre à particules (50) agencé en aval par rapport au deuxième catalyseur (30), qui est relié fluidiquement au deuxième catalyseur (30) pour le passage du gaz d'échappement du deuxième catalyseur (30) dans le filtre à particules (50) ;
une zone de contournement (20) étant réalisée de manière adjacente autour d'une surface extérieure (14) du premier catalyseur (10), dans laquelle le gaz d'échappement s'écoule de la sortie de gaz d'échappement (12) vers l'admission de gaz d'échappement (31) dans le deuxième catalyseur (30),
le premier catalyseur (10) étant introduit dans un boîtier (16) et la zone de contournement (20) étant réalisée par un espace intermédiaire (15) entre le boîtier (16) et le premier catalyseur (10),
les catalyseurs (10, 20) étant réalisés sous forme cylindrique ;
**caractérisé en ce que**
la zone de contournement enveloppe presque entièrement le premier catalyseur (10) ; et
une deuxième distance (d2) est réalisée entre le boîtier (16) et le premier catalyseur (10) sur le côté détourné du deuxième catalyseur (30), laquelle s'élargit dans la première direction de passage de gaz d'échappement (13) de l'admission de gaz d'échappement (11) à la sortie de gaz d'échappement (12) du premier catalyseur (10).

2. Système de post-traitement de gaz d'échappement (1) selon la revendication 1, dans lequel la zone de contournement (20) est réalisée de manière adjacente autour d'une surface d'enveloppe du premier catalyseur (10) .

3. Système de post-traitement de gaz d'échappement (1) selon l'une quelconque des revendications précédentes, **caractérisé en ce qu'**un dispositif de déviation (18) est positionné sur un côté de sortie (26) du premier catalyseur (10), lequel est adapté pour amener le gaz d'échappement du côté de sortie (26) du premier catalyseur (10) à la zone de contournement (20) du premier catalyseur (10).

4. Système de post-traitement de gaz d'échappement (1) selon l'une quelconque des revendications précédentes, **caractérisé en ce que** le premier catalyseur (10) comprend une première direction de passage de gaz d'échappement (13) pour le passage de gaz d'échappement, et dans lequel le deuxième catalyseur (30) comprend une deuxième direction de passage de gaz d'échappement (33) pour le passage de gaz d'échappement, et dans lequel le premier catalyseur (10) est orienté par rapport au deuxième catalyseur (30) de telle sorte que les première et deuxième directions de passage de gaz d'échappement (13, 33) sont orientées entre 45° et 135° l'une par rapport à l'autre, de préférence sont orientées entre 60° et 120° l'une par rapport à l'autre, de manière particulièrement préférée sont perpendiculaires l'une par rapport à l'autre.

5. Système de post-traitement de gaz d'échappement (1) selon l'une quelconque des revendications précédentes, **caractérisé en ce que** la zone de contournement (20) est réalisée au-dessus et/ou au-dessous du premier catalyseur (10), considérée en coupe transversale du premier catalyseur (10) à partir de la première direction de passage de gaz d'échappement (13).

6. Système de post-traitement de gaz d'échappement (1) selon la revendication 1, **caractérisé en ce qu'**une première distance (d1) est réalisée entre le boîtier (16) et le premier catalyseur (10) sur le côté de sortie (26), laquelle se rétrécit dans la deuxième direction de passage de gaz d'échappement (33).

7. Système de post-traitement de gaz d'échappement (1) selon l'une quelconque des revendications précédentes, **caractérisé en ce que** le premier catalyseur (10) est réalisé sous la forme d'un catalyseur métallique et le deuxième catalyseur (30) est réalisé sous la forme d'un catalyseur métallique ou sous la forme d'un catalyseur céramique.

8. Système de post-traitement de gaz d'échappement (1) selon l'une quelconque des revendications précédentes, **caractérisé en ce que** le premier catalyseur (10) et/ou le deuxième catalyseur (30) sont pourvus d'un revêtement Washcoat avec ou sans métal noble.

9. Système de post-traitement de gaz d'échappement (1) selon l'une quelconque des revendications précédentes, **caractérisé en ce que** le filtre à particules (50) est pourvu d'un revêtement Washcoat avec ou sans métal noble.

10. Véhicule, **caractérisé en ce que** le véhicule comprend un moteur à combustion interne (70) avec un système de post-traitement de gaz d'échappement (1) selon l'une quelconque des revendications 1 à 9 précédentes.
